# EUROPEAN PATENT SPECIFICATION

(11) **EP 1 219 858 B1**
(45) Date of publication and mention of the grant of the patent: **05.10.2005**
(21) Application number: 00128700.2
(22) Date of filing: 29.12.2000
(51) Int. Cl.: F16F 9/53

(54) **Shock absorber using a hydraulic fluid and a magnetorheological fluid**
Schwingungsdämpfer gefüllt mit hydraulischer Flüssigkeit und magnetorheologischer Flüssigkeit
Amortisseur utilisant un fluide hydraulique et un fluide magnétorhéologique

(43) Date of publication of application: 03.07.2002
(73) Proprietor: Mando Corporation, Kyonggi-do 451-821 (KR)
(72) Inventor: Koh, You-Seok, Central R&D Center, Mando Corp., Kyonggi-Do 451-821 (KR)
(74) Representative: Lorenz, Werner

(56) References cited:
- GB-A- 2 267 947
- US-A- 5 161 653
- US-A- 5 284 330
- US-A- 5 956 951

## Description

The present invention relates to a shock absorber for use in a motor vehicle; more particularly, to a shock absorber using a magnetorheological (MR) fluid and a hydraulic fluid.

US-A-5 161 653 describes a shock absorber according to the preamble of claim 1.

Typically, motor vehicles are equipped with a suspension system to improve road-adherence and to provide ride-comfort for occupants. The suspension system includes springs and shock absorbers. The shock absorbers are disposed in parallel with the springs to damp the vibration of the springs.

The shock absorbers utilize a fluid flow system incorporating therein either a hydraulic fluid having a constant viscosity or a fluid having a changeable viscosity, e.g., magnetorheological (MR) fluid. The use of MR fluid is advantageous in that the viscosity thereof can be controlled with the application of a magnetic field in order to adjust a damping force being exerted on the springs depending on a traveling condition.

Particularly, MR fluid is a free-flowing liquid with a viscosity. Exposure to a magnetic field can transform the liquid into a near-solid in milliseconds; and with the removal of the magnetic field, the fluid can be returned to its liquid state just as quickly. The degree of change in the viscosity of the MR fluid is proportional to the magnitude of the applied magnetic field.

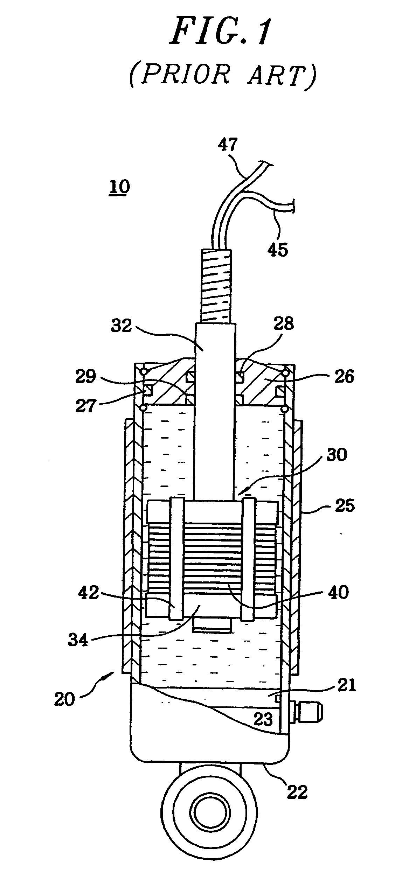

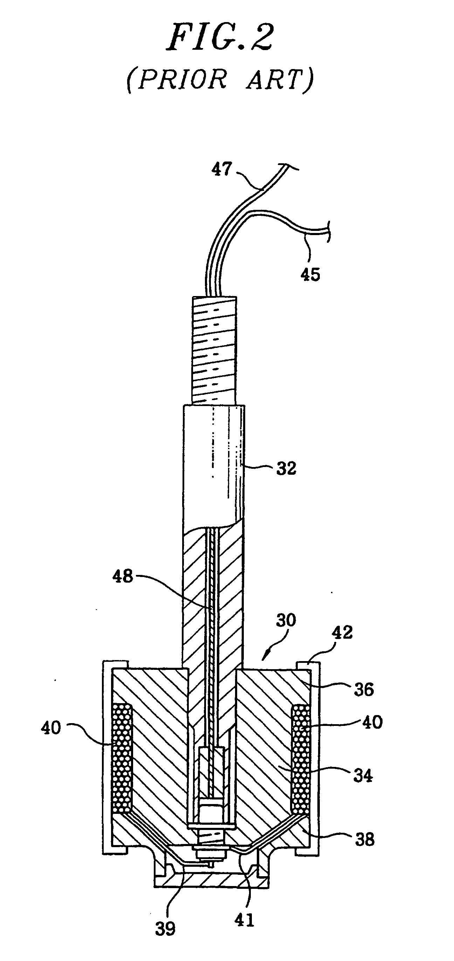

Figs. 1 and 2 are a cross sectional view illustrating a conventional shock absorber using an MR fluid and an enlarged cross sectional view depicting a piston assembly shown in Fig. 1, respectively, disclosed in USPN 5,284,330 entitled "MAGNETORHEOLOGICAL FLUID DEVICE" issued on January 11, 1994.

The shock absorber 10 comprises two principal components: a housing 20 and a piston assembly 30. The housing 20 includes a volume of magnetorheological (MR) fluid. The fluid includes carbonyl iron particles suspended in silicone oil.

The housing 20 is generally of a cylindrical tube with a first closed end 22. A cylindrical sleeve 25 may be affixed to an inner cylinder by any conventional means, e.g., press fit, welding or adhesive to increase the cross-sectional surface area of the housing 20. The cylinder is closed at a second end thereof by an end member 26. A first seal 27 extends about an outer periphery of the end member 26 to prevent fluid leakage between the housing 20 and the end member 26.

A second annular seal 28 is housed in a groove in an inner periphery of the end member 26 and seals against a piston rod 32. A scraper 29 can be used to wipe the MR fluid off the surface of piston rod 32 so as to minimize the loss of MR fluid past the second annular seal 28.

The housing 20 is provided with a floating piston 21 to separate the MR fluid from a pressurized accumulator 23. The pressurized accumulator 23 is necessary to accommodate a fluid displaced by the piston rod 32 as well as to allow for thermal expansion of the fluid.

The piston assembly 30 is shown in greater detail in Fig. 2. A piston head 34 is spool shaped with an upper outwardly extending flange 36 and a lower outwardly extending flange 38. A coil 40 is wound upon the spool-shaped piston head 34 between the upper flange 36 and the lower flange 38. The piston head 34 is made of a magnetically permeable material, such as low carbon steel. Guide rails 42 are attached around an outside of the piston head 34 at particular intervals. As shown in Figs. 1 and 2, four guide rails 42 are shown spaced uniformly about a periphery of the piston head 34.

An electrical connection is made to the coil 40 through the piston rod 32 by lead wires 45 and 47. The first lead wire 45 is connected to a first end of an electrically conductive rod 48 which extends through the piston rod 32 to a Phono-jack connector 46. A center connection of the Phono-jack 46 is connected to a first end 39 of the coil 40. A second end 41 of windings of the coil 40 is attached to a "ground" connection on an outside of the Phono-jack 46. An electrical return path, then, includes the piston rod 32 and the ground lead 47.

However, such an MR shock absorber has some inherent drawbacks. First, since the MR fluid has a higher viscosity than the conventional hydraulic fluid even in the absence of a magnetic field, the MR shock absorber tends to exert a harder damping force against external forces applied thereto, resulting in a deteriorated ride-comfort under certain circumstances. Furthermore, the MR fluid is costly, increasing the manufacturing cost of the shock absorber.

It is, therefore, an object of the present invention to provide a shock absorber using a magnetorheological fluid and a hydraulic fluid.

In accordance with the present invention, there is provided a shock absorber comprising: a housing having an inner space containing hydraulic fluid; a cylinder secured in the housing, the cylinder including an upper room filled with a magnetorhelogical fluid and a lower room filled with a hydraulic fluid; a piston rod movably inserted in the lower room and the upper room of the cylinder; a piston movably inserted in the lower room of the cylinder and secured to the piston rod; and a chamber affixed to the piston rod, wherein the piston rod further includes at least a first orifice for providing a flowing path for the magnetorheological fluid and the piston further includes at least a second orifice for providing a flowing path for the hydraulic fluid in the lower room of the cylinder.

The above and other objects and features of the present invention will become apparent from the following description of preferred embodiments given in conjunction with the accompanying drawings, in which:
- Fig. 1: is a schematic cross sectional view setting forth a shock absorber using a magnetorheological fluid previously disclosed;
- Fig. 2: shows a schematic cross sectional view illustrating a piston assembly incorporated in the shock absorber shown in Fig. 1;
- Fig. 3: offers a schematic cross sectional view depicting a shock absorber using a magnetorheological fluid and a hydraulic fluid in accordance with the present invention;
- Fig. 4: provides a cross sectional view taken along a line A-A in Fig. 3 and
- Figs. 5A and 5B: represent cross sectional views portraying successive operations of the shock absorber shown in Fig. 3, respectively.

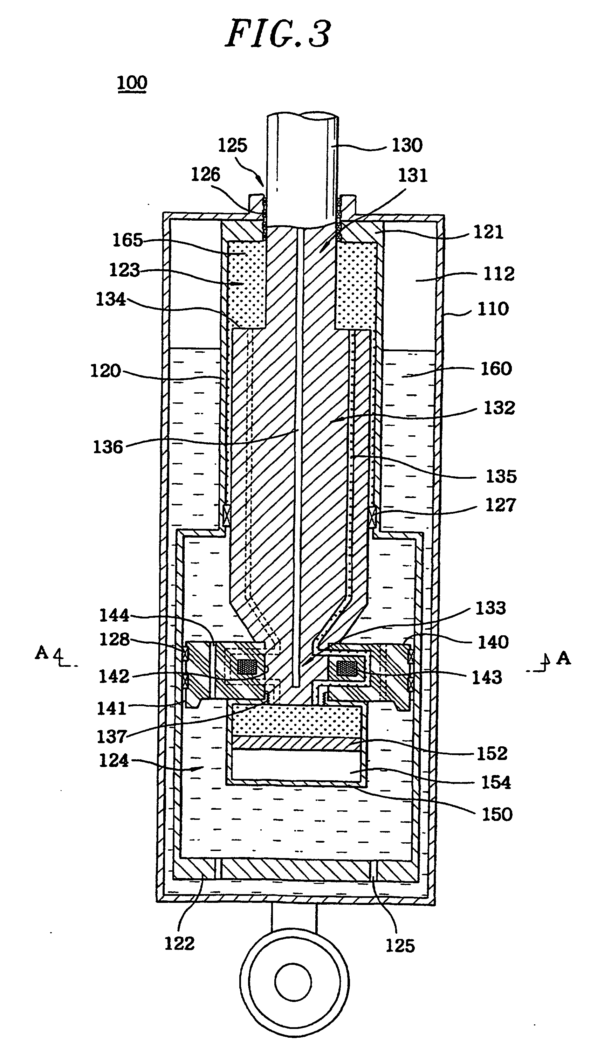

An inventive shock absorber 100 for using in a vehicle, e.g., automobile, includes a housing 110, a cylinder 120, a piston rod 130, a piston 140 and a chamber 150, as shown in Fig. 3.

The housing 110 includes an inner space 112 containing a hydraulic fluid 160 having a constant viscosity.

The cylinder 120 having a first and a second opposite end member 121, 122 is provided with an upper and a lower room 123, 124, the volume of the upper room 123 being smaller than that of the lower room 124, wherein the upper room 123 is filled with a magnetorheological fluid 165 having a changeable viscosity and the lower room 124 is filled with the hydraulic fluid 160. The first end member 121 of the cylinder 120 is secured to the housing 110 with an opening 125 communized therebetween and the second end member 122 of the cylinder 120 is apart from the housing 110 with one or more valve(s) 129 through which the hydraulic fluid 160 can flow between the inner space 112 of the housing 110 and the lower room 124 of the cylinder 120.

The cylinder 120 further includes a first, a second and a third sealing member 126, 127, 128 made of, e.g., Teflon or the like, the first sealing member 126 preventing the magnetorheological fluid 165 in the upper room 123 from flowing out, the second sealing member 127 prohibiting the magnetorheological fluid 165 and the hydraulic fluid 160 from interflowing, and the third sealing member 128 obstructing the hydraulic fluid 160 in the lower room 124 from flowing along with the cylinder 120.

The piston rod 130 having a first, a second and a third part 131, 132, 133 is movably inserted in the cylinder 120 in such a way that the first part 131 is adjacent to the opening 125 of the cylinder 120 and the second part 132 is adjacent to the upper room 123 of the cylinder 120. The dimension of the first part 131 is smaller than that of the second part 132 and due to the difference in the dimensions of the two parts a normal surface 134 is formed in a shape of a disk between the first and the second part 131, 132 to thereby induce volume change of the magnetorheological fluid 165 in the upper room 123 of the cylinder 120 during the reciprocating motion of the piston rod 130. The third part 133 incorporates therein a fastening member 137, e.g., a screw, a rivet, a joint or the like, to mechanically affix the piston rod 130 to the chamber 150.

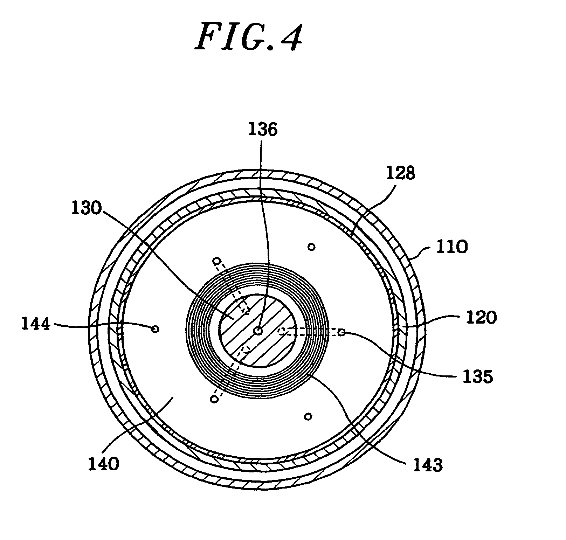

The piston rod 130 further includes an interior cavity 136 and one or more first orifice(s) 135, as shown in Figs. 3 and 4. The interior cavity 136 extends from the first part 131 to the third part 133 for installing electrical connections (not shown) through which electrical current is applied to the piston 140. The first orifice 135 extends from the normal surface 134 to the chamber 150 via the piston 140 for offering flowing paths to the magnetorheological fluid 165 in the upper room 123 of the cylinder 120.

The piston 140 is provided with an outer and an inner periphery 141, 142, the outer periphery 141 being movably inserted in the lower room 124 of the cylinder 120 and the inner periphery 142 being fixed to the third part 133 of the piston rod 130. The piston 140 includes a coil 143 and one or more second orifice(s) 144, the coil 143 being electrically connected to the electrical connection in the interior cavity 136 of the piston rod 130 and the second orifice 144 extending from top to bottom of the piston 140 for providing flowing paths for the hydraulic fluid 160 in the lower room 124 of the cylinder 120.

The piston 140 is structured to form a magnetic field generator, e.g., solenoid, is made of a magnetically permeable material, e.g., ferrite, low carbon steel or the like, and is convolved with the coil 143. Accordingly, when an electrical current is applied to the coil 143 through the electrical connections, magnetic fields are generated around the piston 140, which will, in turns, modulates the viscosity of the magnetorheological fluid 165 passing through the first orifice 135.

While detail description for the electrical connections is omitted in the present embodiment, it will be apparent to skilled person in the art that the present embodiment can achieve the electrical connection by using various devices or methods.

Returning to Fig. 3, the chamber 150 is mechanically affixed to the third part 133 of the piston rod 130 by using the fasten member 137. The chamber 150 includes a floating piston 152 movably inserted therein and an accumulator 154 filled with a gas, e.g., nitrogen, wherein the accumulator 154 is necessary to accommodate the magnetorheological fluid 165 displaced by the piston rod 130 as well as to allow for thermal expansion of the magnetorheological fluid 165.

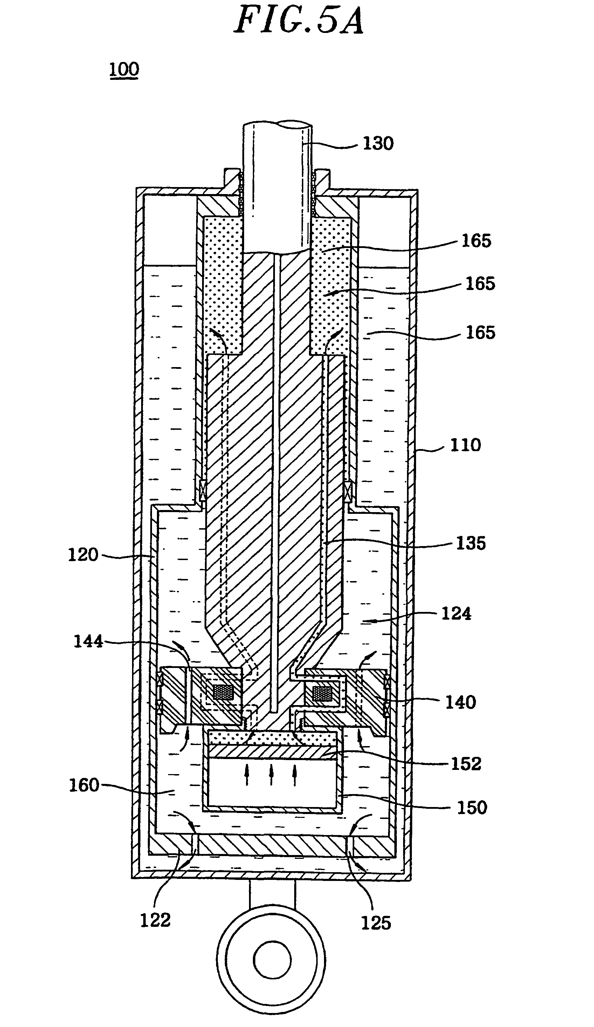

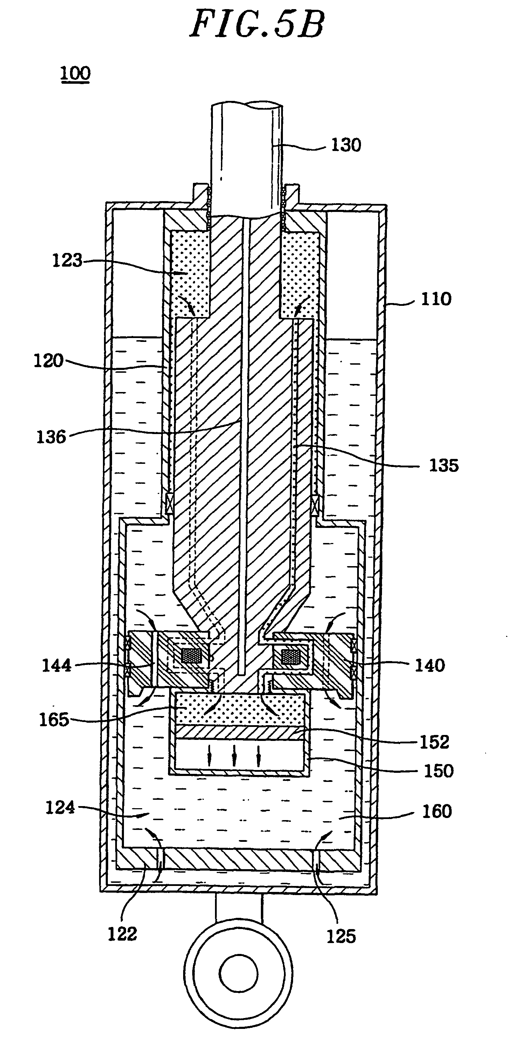

Operations of the shock absorber 100 are described hereafter in accompanying with Figs. 5A and 5B.

As shown in Fig. 5A, when the housing 110 and cylinder 120 are moved upwardly by the impulse applied thereto, the volume of the upper room 123 in the cylinder 120 is increased while the volume of the lower room 124 in the cylinder 120 is decreased because the piston rod 130 and the piston 140 remain at the previous position. At the same time, the spring (not shown) installed in parallel with the shock absorber 100 is compressed. Accordingly, in order to relieve the pressure difference, the magnetorheological fluid 165 in the chamber 150 flows into the upper room 123 through the first orifices 135, thereby pulling the floating piston 152 upwardly, and the hydraulic fluid 160 in the lower room 124 flows upwardly through the second orifices 144 and into the inner space 112 of the housing 110 through the valve 129.

Thereafter, as shown in Fig. 5B, the piston rod 130 and the piston 140 are moved upwardly by the restorative force of the compressed spring (not shown) installed in parallel with the shock absorber 100, thereby decreasing the volume of the upper room 123 in the cylinder 120 while increasing the volume of the lower room 124 in the cylinder 120. Accordingly, in order to relieve the pressure buildup in the upper room 123, the magnetorheological fluid 165 in the upper room 123 flows into the chamber 150 through the first orifices 135, thereby pushing the floating piston 152 downwardly, and the hydraulic fluid 160 in the lower room 124 flows downwardly through the second orifices 144 as well as the hydraulic fluid 160 in the inner space 112 of the housing 110 flows into the lower room 124 through the valve 129. During this operation, the shock absorber 100 functions as a damper for damping the vibration of the spring (not shown).

As may be seen from the above, it should be appreciated that the shock absorber 100 of the present invention utilizes both the hydraulic fluid 160 and the MR fluid 165. Accordingly, the shock absorber 100 can respond sensitively to the impulse applied thereto by using the hydraulic fluid 160 having relatively low viscosity and can also modulate the damping force by using the MR fluid 165 having adjustable viscosity, wherein the viscosity will be adjusted based on various factors, e.g., driving conditions, driver's controls and so on. Furthermore, the expensive MR fluid 165 is employed only in the upper room 123 of the cylinder 120 and the chamber 150, thereby reducing the amount of the MR fluid 165 and, hence, reducing the manufacturing cost of the shock absorber 100.

While the present invention has been shown and described with respect to the particular embodiments, it will be apparent to those skilled in the art that many changes and modifications may be made without departing from the scope of the invention defined in the appended claims.

## Claims

1. A shock absorber (100) comprising a housing (110) having an inner space (112) containing hydraulic fluid (160);
**characterized in that,**
a cylinder (120) is secured in the housing (110), which includes an upper room (123) filled with a magnetorhelogical fluid (165) and a lower room (124) filled with the hydraulic fluid (160);
a piston rod (130) is movably inserted in the lower room (124) and the upper room (123) of the cylinder (120);
a piston (140) is movably inserted in the lower room (124) of the cylinder (120), secured to the piston rod (130) and structured to form a magnetic field generator; and
a chamber (150) is affixed to the piston rod (130), wherein the piston rod (130) further includes at least a first orifice (135) for providing a flowing path for the magnetorheological fluid and the piston (140) further includes at least a second orifice (144) for providing a flowing path for the hydraulic fluid (160) in the lower room (124) of the cylinder (120).

2. The shock absorber of claim 1, wherein the cylinder (120) is provided with a first end member (121) secured to the housing (110) and a second opposite end member (122) apart from the housing (110).

3. The shock absorber of claim 2, wherein the first end member (121) of the cylinder (120) includes an opening (125) communized with the housing (110).

4. The shock absorber of claim 2, wherein the second opposite member (122) of the cylinder (120) includes at least a valve (129) for providing a flowing path for the hydraulic fluid (160) between the inner space (112) of the housing (110) and the lower room (124) of the cylinder (120).

5. The shock absorber of claim 1, wherein volume of the upper room (123) is smaller than that of the lower room (124) in the cylinder (120).

6. The shock absorber of claim 3, wherein the piston rod (130) is provided with a first, a second and a third part (131,132,133), the first part (131) being adjacent to the opening (125) of the cylinder (120) and the second part (132) being adjacent to the upper room (123) of the cylinder (120).

7. The shock absorber of claim 1, wherein the first orifice (135) extends from the upper room (123) to the chamber (150) via the piston (140) and the second orifice (144) extends from top to bottom of the piston (140).

8. The shock absorber of claim 1, wherein the piston (140) is made of a magnetically permeable material and is convolved with the coil (143), to form a solenoid.

9. The shock absorber of claim 1, wherein the chamber (150) includes a floating piston (152) movably installed therein and an accumulator (154) for accommodating the magnetorheological fluid (165) displaced by the piston rod (130) and for allowing thermal expansion of the magnetorheological fluid (165).

10. The shock absorber of claim 1 further comprising a first, a second and a third sealing member (126, 127,128), the first sealing member (126) preventing the magnetorheological fluid (165) in the upper room (123) from flowing out, the second sealing member (127) prohibiting the magnetorheological fluid (165) and the hydraulic fluid (160) from interflowing, and the third sealing member (128) obstructing the hydraulic fluid (160) from flowing along with in the lower room (124) of the cylinder (120).

11. A motor vehicle incorporating therein the shock absorber (100) according to the claim 1.

12. A suspension system incorporating therein the shock absorber (100) according to the claim 1.

## Patentansprüche

1. Schwingungsdämpfer (100), welcher ein Gehäuse (110) mit einem Innenraum (112) aufweist, der eine Hydraulikflüssigkeit (160) enthält;
**dadurch gekennzeichnet, dass**
ein Zylinder (120) in dem Gehäuse (110) angebracht ist, welcher einen oberen Raum (123), der mit einer magnetorheologischen Flüssigkeit (165) gefüllt ist, und einen unteren Raum (124) aufweist, welcher mit der Hydraulikflüssigkeit (160) gefüllt ist;
eine Kolbenstange (130) beweglich in den unteren Raum (124) und den oberen Raum (123) des Zylinders (120) eingeschoben ist;
ein Kolben (140) beweglich in den unteren Raum (124) des Zylinders (120) eingeschoben, an der Kolbenstange (130) angebracht und so ausgebildet ist, dass er einen Magnetfeldgenerator bildet; und eine Kammer (150) an der Kolbenstange (130) angebracht ist, wobei die Kolbenstange (130) des weiteren wenigstens eine erste Öffnung (135) zum Erzeugen eines Strömungspfades für die magnetorheologische Flüssigkeit aufweist, und wobei der Kolben (140) des weiteren wenigstens eine zweite Öffnung (144) zum Erzeugen eines Strömungspfades für die Hydraulikflüssigkeit (160) in dem unteren Raum (124) des Zylinders (120) aufweist.

2. Schwingungsdämpfer nach Anspruch 1, wobei der Zylinder mit einem ersten Endelement (121), welches an dem Gehäuse (110) angebracht ist, und einem zweiten, gegenüberliegenden Endelement (122) versehen ist, welches von dem Gehäuse getrennt ist.

3. Schwingungsdämpfer Anspruch 2, wobei das erste Endelement (121) des Zylinders (120) eine Öffnung (125) aufweist, welche mit dem Gehäuse (110) in Verbindung steht.

4. Schwingungsdämpfer nach Anspruch 2, wobei das zweite, gegenüberliegende Element (122) des Zylinders (120) wenigstens ein Ventil (129) zum Erzeugen eines Strömungspfades für die Hydraulikflüssigkeit (160) zwischen dem Innenraum (112) des Gehäuses (110) und dem unteren Raum (124) des Zylinders (120) aufweist.

5. Schwingungsdämpfer nach Anspruch 1, wobei das Volumen des oberen Raums (123) kleiner ist als dasjenige des unteren Raums (124) in dem Zylinder (120).

6. Schwingungsdämpfer nach Anspruch 3, wobei die Kolbenstange (130) mit einem ersten, einem zweiten und einem dritten Teil (131,132,133) versehen ist, wobei der erste Teil (131) benachbart zu der Öffnung (125) des Zylinders (120) und der zweite Teil (132) benachbart zu dem oberen Raum (123) des Zylinders (120) ist.

7. Schwingungsdämpfer nach Anspruch 1, wobei die erste Öffnung (135) sich von dem oberen Raum (123) über den Kolben (140) zu der Kammer (150) erstreckt, und wobei die zweite Öffnung (144) sich von der Oberseite zu der Unterseite des Kolbens (140) erstreckt.

8. Schwingungsdämpfer nach Anspruch 1, wobei der Kolben aus einem magnetisch permeablen Material hergestellt ist und mit der Spule (143) umgeben ist, um ein Magnetventil zu bilden.

9. Schwingungsdämpfer nach Anspruch 1, wobei die Kammer (150) einen beweglich in derselben angeordneten Schwimmkolben (152) und einen Speicher (154) zum Aufnehmen der durch die Kolbenstange (130) verdrängten magnetorheologischen Flüssigkeit (165) und zum Ermöglichen einer thermischen Ausdehnung der magnetorheologischen Flüssigkeit (165) aufweist.

10. Schwingungsdämpfer nach Anspruch 1, welcher des weiteren ein erstes, ein zweites und ein drittes Dichtelement (126,127,128) aufweist, wobei das erste Dichtelement (126) die magnetorheologische Flüssigkeit (165) in dem oberen Raum (123) an einem Ausfließen hindert, wobei das zweite Dichtelement (127) ein Vermischen der magnetorheologischen Flüssigkeit (165) und der Hydraulikflüssigkeit (160) verhindert, und wobei das dritte Dichtelement (128) die Hydraulikflüssigkeit (160) vom Entlangströmen in den unteren Raum (124) des Zylinders (120) hindert.

11. Kraftfahrzeug, in welchem der Schwingungsdämpfer (100) gemäß Anspruch 1 eingebaut ist.

12. Dämpfungssystem, in welchem der Schwingungsdämpfer (100) gemäß Anspruch 1 eingebaut ist.

## Revendications

1. Amortisseur (100) comprenant un boîtier (110) ayant un espace intérieur (112) contenant un fluide hydraulique (160) ;
**caractérisé en ce que**,
un cylindre (120) est fixé dans le boîtier (110), qui comporte une chambre supérieure (123) remplie avec un fluide magnétorhéologique (165) et une chambre inférieure (124) remplie avec le fluide hydraulique (160) ;
une tige de piston (130) est insérée de façon mobile dans la chambre inférieure (124) et la chambre supérieure (123) du cylindre (120);
un piston (140) est inséré de façon mobile dans la chambre inférieure (124) du cylindre (120), fixé à la tige de piston (130) et agencé pour former un générateur de champ magnétique; et
une chambre (150) est attachée à la tige de piston (130), dans laquelle la tige de piston (130) comporte en outre au moins un premier orifice (135) pour définir un chemin d'écoulement pour le fluide magnétorhéologique et le piston (140) comporte en outre au moins un second orifice (144) pour définir un chemin d'écoulement pour le fluide hydraulique (160) dans la chambre inférieure (124) du cylindre (120).

2. Amortisseur de la revendication 1, dans lequel le cylindre (120) est pourvu d'un premier élément d'extrémité (121) fixé au boîtier (110) et d'un second élément d'extrémité opposé (122) distant du boîtier (110).

3. Amortisseur de la revendication 2, dans lequel le premier élément d'extrémité (121) du cylindre (120) comporte une ouverture (125) commune avec le boîtier (110) .

4. Amortisseur de la revendication 2, dans lequel le second élément d'extrémité opposé (122) du cylindre (120) comporte au moins une soupape (129) pour fournir un chemin d'écoulement pour le fluide hydraulique (160) entre l'espace intérieur (112) du boîtier (110) et la chambre inférieure (124) du cylindre (100).

5. Amortisseur de la revendication 1, dans lequel le volume de la chambre supérieure (123) est plus petit que celui de la chambre inférieure (124) dans le cylindre (120).

6. Amortisseur de la revendication 3, dans lequel la tige de piston (130) comporte une première, une deuxième et une troisième partie (131, 132, 133), la première partie (131) étant adjacente à l'ouverture (125) du cylindre (120) et la deuxième partie (132) étant adjacente à la chambre supérieure (123) du cylindre (120).

7. Amortisseur de la revendication 1, dans lequel le premier orifice (135) s'étend de la chambre supérieure (123) à la chambre (150) par l'intermédiaire du piston (140) et le second orifice (144) s'étend de haut en bas du piston (140).

8. Amortisseur de la revendication 1, dans lequel le piston (140) est réalisé en un matériau magnétiquement perméable et est convoluté avec la bobine (143) pour former un solénoïde.

9. Amortisseur de la revendication 1, dans lequel la chambre (150) comporte un piston flottant (152) logé de façon mobile et un accumulateur (154) pour loger le fluide magnétorhéologique (165) déplacé par la tige de piston (130) et pour permettre une expansion thermique du fluide magnétorhéologique (165).

10. Amortisseur de la revendication 1, comprenant en outre un premier, un deuxième et un troisième élément d'étanchéité (126, 127, 128), le premier élément d'étanchéité (126) empêchant le fluide magnétorhéologique (165) de sortir de la chambre supérieure (123), le deuxième élément d'étanchéité (127) interdisant au fluide magnétorhéologique (165) et au fluide hydraulique (160) de se mélanger, et le troisième élément d'étanchéité (128) empêchant le fluide hydraulique (160) de couler dans la chambre inférieure (124) du cylindre (120).

11. Véhicule à moteur comportant l'amortisseur (100) selon la revendication 1.

12. Suspension comportant l'amortisseur (100) selon la revendication 1.
